# EUROPEAN PATENT SPECIFICATION

(11) **EP 1 999 952 B1**
(45) Date of publication and mention of the grant of the patent: **14.08.2013**
(21) Application number: 07704904.7
(22) Date of filing: 15.01.2007
(51) Int. Cl.: H04N 5/783, H04N 5/76

(54) **VIDEO SUBSTITUTION SYSTEM**
VIDEOERSATZSYSTEM
SYSTÈME DE SUBSTITUTION VIDÉO

(30) Priority: 27.03.2006 US 786270 P
(43) Date of publication of application: 10.12.2008
(73) Proprietor: NDS Limited, Staines, Middlesex TW18 4EX (GB)
(72) Inventor: DAVIES, Colin, John, Hampshire SP6 1LG (GB)
(74) Representative: White, Duncan Rohan
(86) International application number: PCT/GB2007/000098
(87) International publication number: WO 2007/110561

(56) References cited:
- WO-A-2004/017279
- WO-A-2005/096625
- US-A1- 2002 144 262
- US-A1- 2003 184 679
- US-A1- 2006 013 555
- US-B1- 6 909 837

## Description

### FIELD OF THE INVENTION

The present invention generally relates to Digital Video Recorders (DVRs).

### BACKGROUND OF THE INVENTION

Digital Video Recorders (DVRs), also known as Personal Video Recorders (PVRs), are typically used for digital recording of television programs and time-shifted playback of recorded television programs. During such time-shifted playback, many viewers tend to use fast forward and rewind features which are enabled by many DVRs in order to skip commercials. Skipping commercials reduces effectiveness of conventional television advertising and creates a problem for advertisers.

Some aspects of technologies and related material that may be useful in understanding the present invention are described in the following publications:
Published PCT Patent Application WO 2005/096625 of NDS Limited, which describes a system for providing visible messages during PVR trick mode playback;
Published PCT Patent Application WO 2004/072935 of NDS Limited, which describes apparatus and methods for handling interactive applications in broadcast networks;
Published PCT Patent Application WO 02/01866 of NDS Limited, and corresponding US Patent Application S/N 10/297,453 of Tsuria et al, which describe time shifted interactive television;
Published PCT Patent Application WO 00/01149 of NDS Limited, corresponding European Patent EP 1013088 of NDS Limited, and corresponding US Patent Application S/N 09/515,118 of Wachtfogel et al, which describe an advanced television system; and
Published PCT Patent Application WO 01/52541 of NDS Limited, and corresponding US Patent Application S/N 09/914,747 of Wachtfogel et al, which describe advertisements in an end user controlled playback environment.

US-A-2003184679 describes a method for displaying video information, and a program and apparatus that operate in accordance with the method. The method comprises the steps of combining first and second video information representing first and second video frames to form combined video information.

### SUMMARY OF THE INVENTION

The present invention, in preferred embodiments thereof, seeks to provide a video substitution system and method in which a Digital Video Recorder (DVR) is operative, during at least part of an activation period of a trick mode comprising a fast forward mode or a rewind mode, to substitute video displayed during normal content viewing with alternative video. The DVR preferably receives a single video stream comprising the video displayed during normal content viewing and the alternative video, where the video displayed during normal content viewing and the alternative video are down-sampled and spatially combined. Each of the video displayed during normal content viewing and the alternative video is preferably, in its turn, up-sampled for display.

There is thus provided in accordance with a preferred embodiment of the present invention a video substitution method for use with a Digital Video Recorder (DVR) which is operative to store video, the method including retrieving stored video recorded from a single video stream, the single video stream comprising an integer n2 video frames, each of the n2 video frames comprising a plural integer n1 of spatially combined sub-pictures and wherein each of said sub-pictures corresponds to one frame of one of n1 down-sampled video sequences, the n2 video frames thereby comprising n1 down-sampled video sequences, up-sampling at least part of a first one of the n1 down-sampled video sequences, thereby producing a first up-sampled video sequence, displaying the first up-sampled video sequence on a display during normal content viewing, detecting activation of a trick mode including one of the following: a fast forward mode, and a rewind mode, and in response to the detecting: up-sampling at least part of a second one of the n1 down-sampled video sequences, thereby producing a second up-sampled video sequence, and displaying the second up-sampled video sequence instead of the first up-sampled video sequence during at least part of an activation period of the trick mode.

Preferably, the retrieved video is associated with signaling information which signals the DVR to perform the up-sampling. By way of a non-limiting example, n1 equals two.

Preferably, the second one of the n1 down-sampled video sequences includes advertisement information. Further preferably, the second one of the n1 down-sampled video sequences is tailored to provide a better viewing experience during trick mode playing than the first one of the n1 down-sampled video sequences.

Still further preferably, the n2 video frames include coded video frames.

The coded video frames preferably include MPEG coded video frames. The MPEG coded video frames preferably include at least one of the following: MPEG-2 coded video frames, and MPEG-4 coded video frames.

There is also provided in accordance with a preferred embodiment of the present invention a Digital Video Recorder (DVR) including a memory which stores video, and a DVR processing element which is operative to perform the following: retrieve, from the memory, stored video recorded from a single video stream, the single video stream comprising an integer n2 video frames, each of the n2 video frames comprising a plural integer n1 spatially combined sub-pictures and wherein each of said sub-pictures corresponds to one frame of one of n1 down-sampled video sequences, the n2 video frames thereby comprising n1 down-sampled video sequences, up-sample at least part of a first one of the n1 down-sampled video sequences, thereby producing a first up-sampled video sequence, display the first up-sampled video sequence on a display during normal content viewing, detect activation of a trick mode including one of the following: a fast forward mode, and a rewind mode, and in response to detection of the activation of the trick mode: up-sample at least part of a second one of the n1 down-sampled video sequence, thereby producing a second up-sampled video sequence, and display the second up-sampled video sequence on the display instead of the first up-sampled video sequence during at least part of an activation period of the trick mode.

### BRIEF DESCRIPTION OF THE DRAWINGS

The present invention will be understood and appreciated more fully from the following detailed description, taken in conjunction with the drawings in which:
Figs. 1A and 1B together constitute a simplified partly pictorial, partly block diagram illustration of a video substitution system constructed and operative in accordance with a preferred embodiment of the present invention;
Fig. 2 is a simplified flowchart illustration of a preferred method of operation of a DVR in the system of Figs. 1A and 1B; and
Fig. 3 is a simplified partly pictorial, partly block diagram illustration representing a single video sequence that is composed from two synchronized video sequences that have been horizontally down-sampled by a factor of two and placed side by side, and up-sampling of a first one of the two down-sampled synchronized video sequences for normal video viewing and of a second one of the two down-sampled synchronized video sequences for viewing during a trick mode.

### DETAILED DESCRIPTION OF A PREFERRED EMBODIMENT

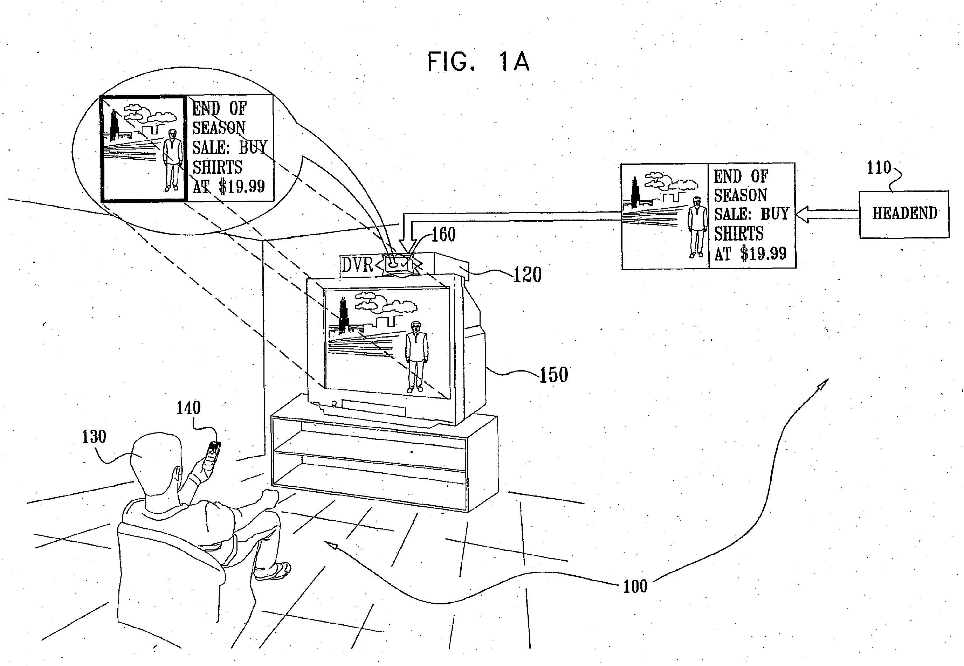

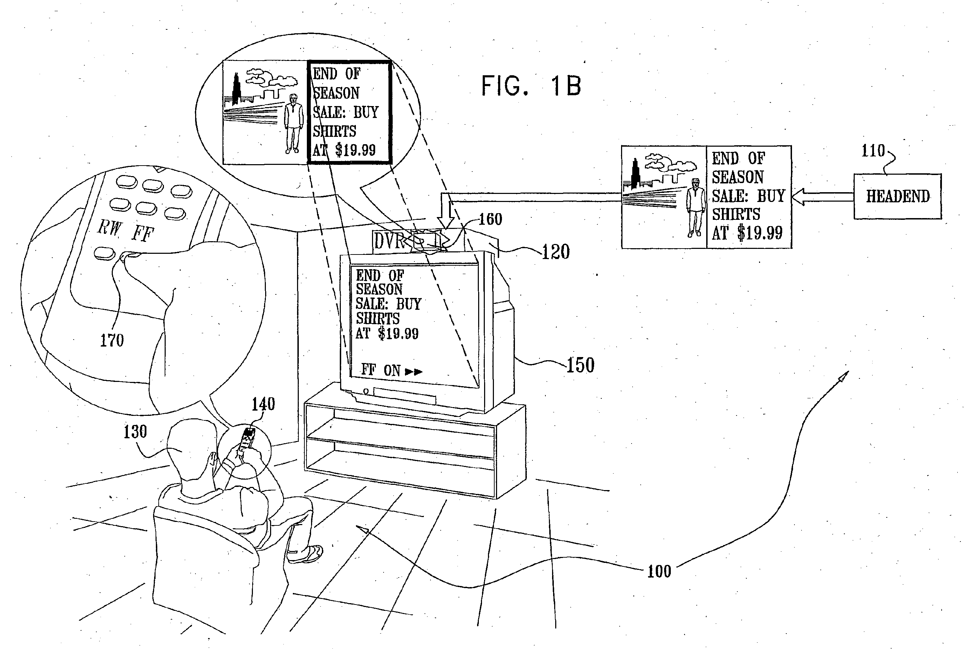

Reference is now made to Figs. 1A and 1B, which together constitute a simplified partly pictorial, partly block diagram illustration of a video substitution system 100 constructed and operative in accordance with a preferred embodiment of the present invention.

In the system 100, a headend 110 broadcasts or otherwise delivers video, audio and signaling information. The video, the audio and the signaling information broadcasted or otherwise delivered by the headend 110 preferably pertain to at least one of the following: pay and / or non-pay television programs; multimedia information; audio programs; data; games; and information from computer based networks such as the Internet.

The signaling information is preferably associated with the video and is used to signal that the video comprises down-sampled parts which are intended to be up-sampled for display. The audio preferably includes one or more sound tracks which accompany the video.

Preferably, the headend 110 broadcasts or otherwise delivers the video, the audio and the signaling information via at least one of the following (all not shown): a satellite based communication network; a cable based communication network; a conventional terrestrial broadcast television network; a telephony based television delivery network; a mobile-telephony based television delivery network; and an Internet Protocol (IP) based television delivery network. Persons skilled in the art will appreciate that any appropriate broadcast or delivery technology may be used.

One non-limiting example of an appropriate telephony or IP based television delivery network is the Synamedia^{™} system, commercially available from NDS Limited, One Heathrow Boulevard, 286 Bath Road, West Drayton, Middlesex UB7 0DQ, United Kingdom.

Preferably, the video, the audio and the signaling information broadcasted or otherwise delivered by the headend 110 are received at a Digital Video Recorder (DVR) 120. The DVR 120 may, for example, be located at a site of a user 130 and controlled by the user 130 via a remote control (RC) 140.

The DVR 120 is typically used for digital recording of television programs and time-shifted playback of recorded television programs. The DVR 120 includes a high-capacity memory and conventional DVR circuitry (both not shown) as used in conventional DVRs. Non-limiting examples of conventional DVRs well known in the art include: the system described in Published PCT Patent Application WO 00/01149 ofNDS Limited, corresponding European Patent EP 1013088 of NDS Limited, and corresponding US Patent Application S/N 09/515,118 of Wachtfogel et al, referred to above and incorporated herein by reference; and the XTV^{™} system, commercially available from NDS Limited, One Heathrow Boulevard, 286 Bath Road, West Drayton, Middlesex UB7 0DQ, United Kingdom. DVRs are also known as Personal Video Recorders (PVRs).

Preferably, the DVR 120 stores the broadcast or otherwise delivered video and audio and the signaling information in the high-capacity memory and uses the conventional DVR circuitry for decoding and processing video and audio retrieved from the high-capacity memory for display on a display 150. The display 150 may preferably comprise any appropriate display such as, for example: a television; or a computer monitor comprising speakers.

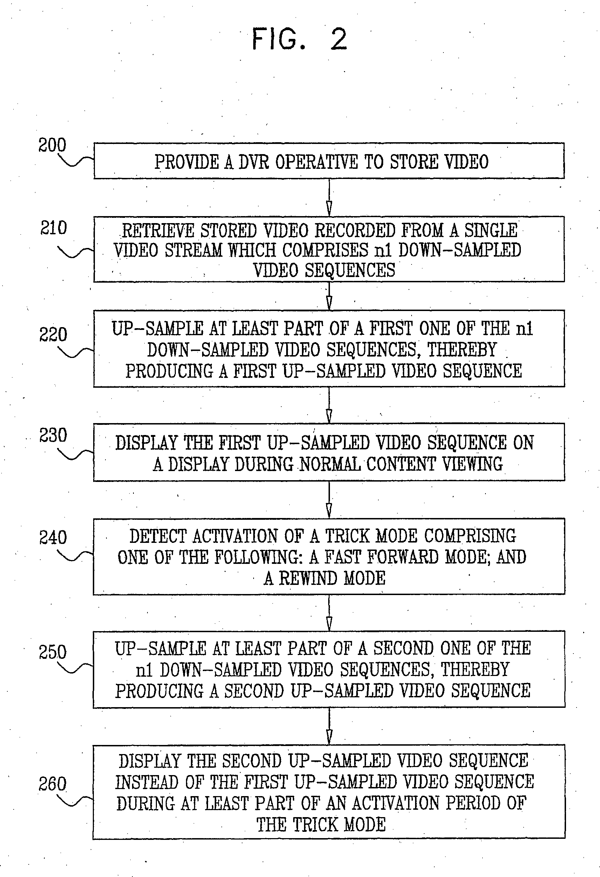

In accordance with a preferred embodiment of the present invention the DVR 120 also includes, in addition to the high capacity memory and the conventional DVR circuitry, a DVR processing element 160 which is implemented in software or in a combination of software and hardware. The DVR processing element 160 preferably provides functionality, as described herein with reference to Figs. 1A, 1B, and 2, which pertains, inter *alia,* to the following: video retrieval; determination, in accordance with the signaling information, whether to up-sample down-sampled parts of retrieved video; and up-sampling and display of down-sampled parts of the retrieved video as necessary. Persons skilled in the art will appreciate that hardware components of the DVR processing element 160 may be comprised in the DVR circuitry and / or associated with the DVR circuitry, and software components of the DVR processing element 160 may be inserted into and / or associated with conventional DVR software and / or firmware.

In operation, the DVR 120, using the DVR processing element 160, retrieves stored video recorded from a single video stream. The single video stream preferably comprises a first plurality of down-sampled video sequences, where a positive integer n1 indicates the number of down-sampled video sequences. The n1 down-sampled video sequences are preferably mutually synchronized and formatted in a second plurality of video frames, where a positive integer n2 indicates the number of video frames. Preferably, each of the n2 video frames comprises n1 spatially combined sub-pictures, each of which corresponds to one frame of the n1 down-sampled video sequences.

Preferably, the n2 video frames comprise coded video frames. The coded video frames preferably comprise MPEG (MPEG - Moving Picture Experts Group) coded video frames comprising at least one of the following: MPEG-2 coded video frames; and MPEG-4 coded video frames.

By way of a non-limiting example and for the sake of simplicity of description, Figs. 1A and 1B depict a case in which n1 equals two, it being appreciated that n1 may alternatively be greater than two. When n1=2, down-sampling of video results, for example, in a reduction of horizontal resolution of the video by a factor of two.

In addition to retrieval of the stored video recorded from a single video stream the DVR 120 also preferably retrieves stored audio which accompanies the retrieved video and stored signaling information which is associated with the retrieved video.

Preferably, the DVR 120, using the DVR processing element 160, up-samples at least part of a first one of the n1 down-sampled video sequences, thereby producing a first up-sampled video sequence. The DVR 120 then preferably displays the first up-sampled video sequence on the display 150 during normal content viewing. Also, during normal content viewing, the DVR 120 provides the audio which accompanies the first one of the n1 down-sampled video sequences to the display 150 for playing. Display of the first up-sampled video sequence on the display 150 is depicted in Fig. 1A.

Typically, the DVR 120 enables the user 130 to activate a trick mode comprising one of the following: a fast forward (FF) mode; and a rewind (RW) mode. The user 130 may preferably activate the trick mode by pressing on an appropriate key on the RC 140. By way of a non-limiting example, the user 130 is shown in Fig. 1B pressing a fast forward (FF) key 170 on the RC 140.

Preferably, upon the DVR 120 detecting activation of such a trick mode, the DVR 120 not only performs the trick mode but also preferably up-samples, using the DVR processing element 160, at least part of a second one of the n1 down-sampled video sequences, thereby producing a second up-sampled video sequence. The DVR 120 then preferably displays the second up-sampled video sequence instead of the first up-sampled video sequence during at least part of an activation period of the trick mode. Display of the second up-sampled video sequence on the display 150 is depicted in Fig. 1B.

It is appreciated that up-sampling of the at least part of the first one of the n1 down-sampled video sequences and of the at least part of the second one of the n1 down-sampled video sequences is preferably performed in accordance with the signaling information which signals the DVR processing element 160 to perform the up-sampling. The signaling information preferably signals the DVR processing element 160 to perform the up-sampling, for example, by employing a flag whose value determines whether up-sampling of video portions associated with the flag is to be performed.

For example, the flag may be assigned a value of "0" to indicate that up-sampling of associated video is not to be performed and a value of "1" to indicate that up-sampling of the associated video is to be performed. The DVR processing element 160 preferably checks a value of the flag associated with each video portion, and up-samples video portions in which the flag associated therewith is assigned a value of "1" and does not up-sample video portions in which the flag associated therewith is assigned a value of "0".

Preferably, the DVR processing element 160 also enables switching from displaying the first up-sampled video sequence to displaying the second up-sampled video sequence during at least part of an activation period of a trick mode only if the at least part of the activation period of the trick mode occurs during display of up-sampled video, that is, video having the flag associated therewith assigned a value of "1".

The first one of the n1 down-sampled video sequences typically includes a television program which the user 130 views during normal content viewing. The second one of the n1 down-sampled video sequences may preferably comprise advertisement information, and thus during the at least part of the activation period of the trick mode the advertisement information is preferably displayed to the user 130. As the at least part of the activation period of the trick mode is ended, the DVR processing element 160 returns to up-sampling the first one of the n1 down-sampled video sequences and the DVR 120 therefore returns to displaying the first up-sampled video sequence on the display 150. Thus, advertisement information is displayed without interfering user activity, and effectiveness of conventional television advertising is maintained.

It is appreciated that the second one of the n1 down-sampled video sequences may alternatively comprise, for example, synopsis information for a program being viewed during normal content viewing or trailers for other content or advertising material.

It is further appreciated that during activation of the trick mode the retrieved video comprising all the n1 down-sampled video sequences is decoded. Therefore, the second one of the n1 down-sampled video sequences which is displayed during the at least part of the activation period of the trick mode is displayed at a speed of the trick mode which is different than normal display speed. Typically, display of television content at a trick mode speed results in a poor viewing experience as is well known today in television systems. However, since the second one of the n1 down-sampled video sequences is intended for viewing only during trick mode playing, a creator of the second one of the n1 down-sampled video sequences, such as a broadcaster / content provider, may preferably tailor the second one of the n1 down-sampled video sequences before broadcasting to provide a better viewing experience during trick mode playing than, for example, the first one of the n1 down-sampled video sequences would have provided if it were up-sampled and displayed during trick mode playing. Additionally, the creator of the second one of the n1 down-sampled video sequences may also tailor the second one of the n1 down-sampled video sequences before broadcasting to be coding efficient.

For example, the broadcaster / content provider may tailor the second one of the n1 down-sampled video sequences to include only a still image or a slide with advertisement information, which still image or slide does not change during trick mode playing and thus display of the still image or slide provides a good viewing experience.

Further for example, if the retrieved video is coded in MPEG-2, the broadcaster / content provider may tailor the second one of the n1 down-sampled video sequences to only change frame content of frames to be encoded as I-frames. The frame content of each such frame is preferably repeated until another I-frame is reached such that predictive coding employed in MPEG-2 P-frames and B-frames may represent the video of the second one of the n1 down-sampled video sequences efficiently using a lower number of bits than normally used in coding of conventional video. Coding and decoding thus become efficient because they are performed only on I-frames.

It is appreciated that a good coding efficiency may be obtained even when a rate of change of video frames in the second one of the n1 down-sampled video sequences is not synchronized with I-frame encoding.

If the trick mode is activated in order to skip a commercial, the advertisement information may include a different commercial or an advertising message which would not be seen in normal viewing. The advertising message may span throughout an entire commercial break, so that rather than viewing, for example, a fast forwarded commercial having a poor viewing experience due to fast forwarding, the user 130 is presented with a more concise advertising message having a good viewing experience which is comparable to viewing experience in normal television viewing.

In a case where n1 is greater than two, there is more than one down-sampled video sequence available for viewing during trick mode playing, such as n3 down-sampled video sequences, where n3 is a positive integer greater than one. In such a case, each of the n3 down-sampled video sequences may include a different advertising message, and each such different advertising message may be targeted to different users based on demographic information of such users. Such targeted advertisement is typically appealing to advertisers. Additionally, a countdown to restart of normal programming may be overlaid on any one of or some of the different advertising messages thus adding functionality that also appeals to the users.

It is appreciated that various sub-combinations of the system 100 of Figs. 1A and 1B may comprise alternative preferred embodiments of the present invention. For example, and without limiting the generality of the foregoing, each of the following may comprise an alternative preferred embodiment of the present invention: the DVR 120; and the DVR processing element 160.

Reference is now made to Fig. 2, which is a simplified flowchart illustration of a preferred method of operation of the DVR 120 in the system 100 of Figs. 1A and 1B.

A DVR which is operative to store video is preferably provided (step 200). Preferably, stored video recorded from a single video stream is retrieved (step 210) at a selection of a user. The single video stream preferably comprises a first plurality of down-sampled video sequences, where a positive integer n1 indicates the number of down-sampled video sequences. The n1 down-sampled video sequences are preferably mutually synchronized and formatted in a second plurality of video frames, where a positive integer n2 indicates the number of video frames. Preferably, each of the n2 video frames comprises n1 spatially combined sub-pictures, each of which corresponds to one frame of the n1 down-sampled video sequences.

Further preferably, at least part of a first one of the n1 down-sampled video sequences is up-sampled (step 220), thereby producing a first up-sampled video sequence. The first up-sampled video sequence is preferably displayed (step 230) on a display during normal content viewing.

Preferably, upon detecting (step 240) activation of a trick mode, at least part of a second one of the n1 down-sampled video sequences is up-sampled (step 250), thereby producing a second up-sampled video sequence. The second up-sampled video sequence is then preferably displayed (step 260) instead of the first up-sampled video sequence during at least part of an activation period of the trick mode.

The trick mode preferably comprises one of the following: a fast forward mode; and a rewind mode. It is appreciated that the second one of the n1 down-sampled video sequences is preferably tailored to provide a better viewing experience during trick mode playing than, for example, the first one of the n1 down-sampled video sequences would have provided if it were up-sampled and displayed during trick mode playing. Additionally, the second one of the n1 down-sampled video sequences may also be tailored to be coding efficient.

A further particularly detailed description of one possible implementation of the preferred embodiment is provided in Appendix A, which is titled "Method for the delivery and display of an alternative video during fast forward or rewind through recorded broadcast content". Appendix A is a document which will aid in understanding certain preferred embodiments of the present invention. The implementation of Appendix A is not meant to be limiting.

It is appreciated that software components of the present invention may, if desired, by implemented in ROM (read only memory) form. The software component may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the claims which follow.

### Appendix A

Method for the delivery and display of an alternative video during fast forward or rewind through recorded broadcast content

### Introduction

This document introduces a novel concept which enables delivery and display of an alternative video when a viewer chooses to fast forward or rewind through recorded content. The concept can be applied to the problem of Digital Video Recorder (DVR) users' fast forwarding through television advertising breaks.

### Current State

It is well known that many DVR users fast forward through advertising breaks when playing back content from a DVR disk. The message an advertiser wishes to convey to the viewer is lost. This compromises the effectiveness of conventional TV advertising and threatens the advertising revenue model for many broadcast TV channels.

### Description of the Invention

The novel concept presented here is a method of delivering and displaying an alternative video to the viewer who is fast forwarding or rewinding through recorded content.

### 3.1 Technical background

It is assumed the reader has a basic understanding of video coding techniques such as MPEG-2. In particular the reader should understand the use of key or intra coded frames (e.g., MPEG-2 I frames) and predicted or inter coded frames (e.g., MPEG-2 P or B frames).

### 3.1.1 Required broadcast video background

Existing broadcast digital video coding systems, such as MPEG-2, can present the user full screen video from broadcast streams that are actually coded at a lower spatial resolution. By coding video at lower resolutions the video may be broadcast at lower bitrates than full resolution video with only the introduction of a small loss of sharpness. This is common practice in many broadcast deployments.

The original full screen resolution video (D1 resolution for standard definition video) at a broadcast center can be down-sampled by a video encoder, for example by reducing the horizontal resolution of the video by two (half D1 resolution). A digital video stream comprising such down-sampled video is broadcast and received by a video decoder in a set top box (STB). The video decoder decodes the stream to create half D1 resolution video. Before presentation on a viewer's television the video is up-sampled to create full screen video resolution.

More video display flexibility is commonly available to interactive applications running on the STB, where regions of decoded video may be scaled up to full screen. Such scaling up is used in the Xstreamplay system of NDS and described in Published PCT Patent Application WO 2004/072935 of NDS Limited.

### 3.1.2 Required DVR trick play background

DVRs offer users the capability of fast-forwarding or rewinding the video. Such capability is also referred to as "trick play" or "trick mode". Typically, such capability is implemented in two different ways, smooth or jerky, depending on the speed of trick play required and constraints of video decoder implementation.

For smooth fast forward at low speeds it is common for the video decoder to decode the complete video stream in a faster than real time mode and only present the viewer with every Nth frame at a conventional display frame rate. The viewer sees a very smooth video fast forward.

For higher fast forward speeds it is often not possible to use the smooth fast forward approach of decoding the entire video bitstream due to the required data bandwidth and processing speeds. Instead, the decoder makes small jumps through the recorded video stream and decodes and presents key (I) frames only. The actual displayed frame rate is reduced so the video appears jerky.

### 3.2 The Concept

The concept is to specially compose and format the broadcast video and then use the capability of the STB video decoder to up-sample regions of the broadcast video to present the viewer with different video during certain DVR trick modes (e.g., jerky fast forward and rewind).

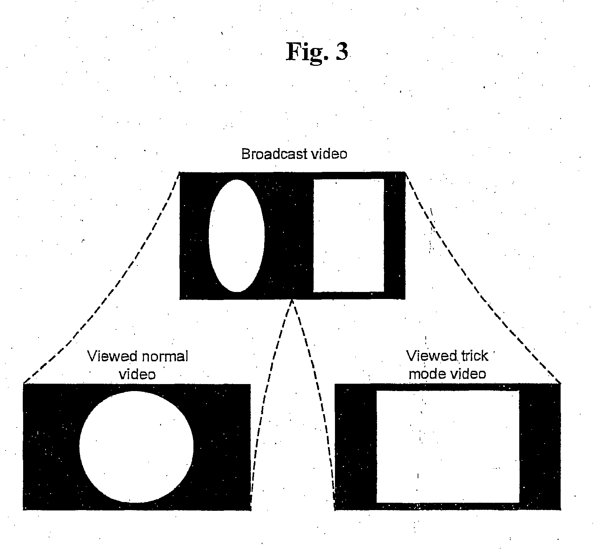

Fig. 3 illustrates the principle. The top of the diagram shows a single video sequence that is composed from two synchronized video sequences that have been horizontally down-sampled by a factor of two and placed side by side.

During normal decode the video decoder selects the left hand side of the video to up-sample to full screen so the viewer sees the "normal video". This normal view of the video is exactly as broadcast today and matches the broadcast audio track(s). For normal video in Fig. 3 the user views the circle.

During selected trick modes, such as the jerky fast forward described previously, the video decoder not only performs the required fast forward operation but also chooses to display the right hand side of the decoded video frames, up-sampled to full screen. In this instance the viewer will see the rectangle of Fig. 3. There may not be any accompanying audio track.

It should be clear that a single video stream is encoded and broadcast. This video is composed of two videos horizontally down-sampled by a factor of two and placed side by side. The decoding of the broadcast stream during normal viewing or trick modes is exactly the same as for existing broadcast except for the decision to up-sample and display only one half of the decoded video frames.

The steps involved include:
- Creation of the specific side by side broadcast video, either:
   ○ Prior to broadcast; or
   ○ At the time of broadcast by dynamic combination of different video sources.
- Signaling to the video decoder the requirement to display one half of the broadcast video up-sampled to full resolution during normal viewing. This signaling should be dynamic so that the functionality can be available at some times and not at others.
- The video decoder selecting to display the other half of the broadcast video up-sampled to full resolution during certain video trick modes, such as jerky I frame based fast forward and rewind.

### 3.2.1 Examples of use

This section gives illustrations of the use of such technique, where the video that is shown during trick modes is authored to be specifically displayed in such modes. It is expected that true broadcast creative types will find many more applications.

One point to note is that when displaying the trick mode video it should still be clear to the viewer that the requested fast forward or rewind is taking place.

### 3.2.1.1 In Advertising

There are two obvious applications to the use of this technique within advertising breaks:
- Presenting the viewer with trick mode video containing simple images of brand identity and message correlated with the advert the user would see in normal viewing mode. Often such messages are lost when the viewer fast forwards through a normal broadcast advert.
- Presenting the viewer with trick mode video containing a different advertising message to that which would be seen in normal viewing. This message could span the entire advertising break, so rather than seeing several quick messages during trick playing the viewer sees a single stronger message. Such advertising could be targeted at a DVR viewer demographic which may be attractive to some advertisers. Functionally, a brand could build trust with the viewers by including a countdown to the restart of the normal programming.

### 3.2.1.2 Other content

While advertising was the primary motivation for generating the idea, the above approach is also applicable to other content. For example, trick mode video within magazine style content could present synopsis information for an article being fast forwarded (or rewound) through rather than necessitating the viewer to interpret images that are flashing past. A countdown and a direction, past or future, to other articles could be presented so that the viewer can easily and quickly navigate to parts of the content that are of interest to the viewer.

In fact trailers for other content or advertising messages could even be presented within a program when someone presses fast forward!

### 3.2.2 Impact on compression efficiency

The knowledge that the trick mode side of the broadcast video is only ever to be seen when the viewer is viewing certain trick modes means that such side of the video can be authored to be compression efficient. For example, if it will only be displayed in jerky I frame mode then such side of the video could be simply repeated at the rate of I frames used in the video coding. Typical DVB MPEG-2 broadcasts have one I frame every ¹/₂ second. If encoding of I frames can be synchronized to a rate of change of video frames then coding will be most efficient, as the predicted frames should have no information to convey: If the rate of change of video frames cannot be synchronized with I frame coding then compression efficiency will still be much greater than for standard video.

### 3.2.3 Applicability to video standards

Digital TV is at a stage of transition. Currently MPEG-2 video systems are widely deployed throughout the developed world, mainly delivering standard definition video content. A recent development has been the wide scale deployment of PVR devices. However, several broadcasters are now developing new systems for delivery of high definition content based upon the MPEG-4 part 10 video standard. For some systems the standard receivers for the high definition content will be DVRs.

Hence there are two obvious video standards for which the concept may preferably be implemented. This does not preclude the use of the approach with any other video format, proprietary or standardized.

### 3.2.3.1 MPEG-2

In MPEG-2 video existing deployed receivers may automatically display 'normal' part of the video. Regarding signaling, proprietary signaling at the video broadcast level may preferably be added.

### 3.2.3.2 MPEG-4 part 10

As MPEG-4 part 10 video devices are yet to be widely deployed in the broadcast TV market it may be possible to define new signaling and get it added to the standard as an amendment. It would be simple to add proprietary signaling at the video broadcast level.

## Claims

1. A video substitution method for use with a Digital Video Recorder (DVR, 120) which is operative to store video, the method comprising:
retrieving stored video recorded from a single video stream, the single video stream comprising a plural integer number n2 of video frames, each of the n2 video frames comprising a plural integer n1 of spatially combined sub-pictures and wherein each of said sub-pictures corresponds to one frame of one of n1 down-sampled video sequences, the n2 video frames thereby comprising n1 down-sampled video sequences;
up-sampling at least part of a first one of the n1 down-sampled video sequences, thereby producing a first up-sampled video sequence;
displaying the first up-sampled video sequence on a display during normal content viewing;
detecting activation of a trick mode comprising one of the following: a fast forward mode; and a rewind mode; and
in response to the detecting:
up-sampling at least part of a second one of the n1 down-sampled video sequences, thereby producing a second up-sampled video sequence; and
displaying the second up-sampled video sequence instead of the first up-sampled video sequence during at least part of an activation period of the trick mode.

2. The method according to claim 1 and wherein the retrieved video is associated with signaling information which signals the DVR (120) to perform the up-sampling.

3. The method according to claim 1 or claim 2 and wherein n1 equals two.

4. The method according to any of claims 1 - 3 and wherein the second one of the n1 down-sampled video sequences comprises advertisement information.

5. The method according to any of claims 1 - 4 and wherein the second one of the n1 down-sampled video sequences is tailored to provide a better viewing experience during trick mode playing than the first one of the n1 down-sampled video sequences.

6. The method according to any of claims 1 - 5 and wherein the n2 video frames comprise coded video frames.

7. The method according to claim 6 and wherein the coded video frames comprise MPEG coded video frames.

8. The method according to claim 7 and wherein the MPEG coded video frames comprise at least one of the following: MPEG-2 coded video frames; and MPEG-4 coded video frames.

9. A Digital Video Recorder (DVR, 120) comprising:
a memory storing video; and
a DVR processing element (160) which is adapted to:
retrieve, from the memory, stored video recorded from a single video stream, the single video stream comprising a plural integer number n2 of video frames, each of the n2 video frames comprising a plural integer n1 spatially combined sub-pictures and wherein each of said sub-pictures corresponds to one frame of one of n1 down-sampled video sequences, the n2 video frames thereby comprising n1 down-sampled video sequences;
up-sample at least part of a first one of the n1 down-sampled video sequences, thereby producing a first up-sampled video sequence;
display the first up-sampled video sequence on a display during normal content viewing;
detect activation of a trick mode comprising one of the following: a fast forward mode; and a rewind mode; and
in response to detection of the activation of the trick mode:
up-sample at least part of a second one of the n1 down-sampled video sequences, thereby producing a second up-sampled video sequence; and
display the second up-sampled video sequence on the display instead of the first up-sampled video sequence during at least part of an activation period of the trick mode.

10. The DVR (120) according to claim 9 and wherein the retrieved video is associated with signaling information which signals the DVR to perform up-sampling.

11. The DVR (120) according to claim 9 or claim 10 and wherein n1 equals two.

12. The DVR (120) according to any of claims 9 - 11 and wherein the second one of the n1 down-sampled video sequences comprises advertisement information.

13. The DVR (120) according to any of claims 9 - 12 and wherein the second one of the n1 down-sampled video sequences is tailored to provide a better viewing experience during trick mode playing than the first one of the n1 down-sampled video sequences.

14. The DVR (120) according to any of claims 9 - 13 and wherein the n2 video frames comprise coded video frames.

15. The DVR (120) according to claim 14 and wherein the coded video frames comprise MPEG coded video frames.

## Patentansprüche

1. Videoaustauschverfahren zur Verwendung mit einem digitalen Videorekorder (DVR, 120), der betriebsfähig ist, Video zu speichern, wobei das Verfahren umfasst:
Abrufen gespeicherten Videoinhalts aus einem einzelnen Videostrom, wobei der einzelne Videostrom eine plurale ganze Zahl n2 von Videorahmen umfasst, wobei jeder der n2 Videorahmen eine plurale ganze Zahl n1 von räumlich kombinierten Teilbildern umfasst und worin jedes der Teilbilder einem Rahmen aus einer von n1 downgesampleten Videosequenzen entspricht, wodurch die n2 Videorahmen n1 downgesamplete Videosequenzen umfassen;
Upsampling mindestens eines Teils einer ersten der n1 downgesampleten Videosequenzen, dadurch Erzeugen einer ersten upgesampleten Videosequenz;
Anzeigen der ersten upgesampleten Videosequenz auf einer Anzeige während des normalen Betrachtens von Inhalten;
Ermitteln der Aktivierung eines Trickmodus, der eines von Folgendem umfasst: ein Schnellvorlaufmodus; und ein Rückspulmodus; und
als Antwort auf das Ermitteln:
Upsampling mindestens eines Teils einer zweiten der n1 downgesampleten Videosequenzen, dadurch Erzeugen einer zweiten upgesampleten Videosequenz; und
Anzeigen der zweiten upgesampleten Videosequenz anstelle der ersten upgesampleten Videosequenz zumindest während eines Teils einer Aktivierungsperiode des Trickmodus.

2. Verfahren nach Anspruch 1, und worin das abgerufene Video mit Signalisierungsinformation verknüpft ist, die dem DVR (120) signalisiert, das Upsampling zu beginnen.

3. Verfahren nach Anspruch 1 oder Anspruch 2, und worin n1 gleich zwei ist.

4. Verfahren nach einem der Ansprüche 1 bis 3, und worin die zweite der n1 downgesampleten Videosequenzen Werbeinformation umfasst.

5. Verfahren nach einem der Ansprüche 1 bis 4, und worin die zweite der n1 downgesampleten Videosequenzen darauf zugeschnitten ist, während des Abspielens des Trickmodus ein besseres Betrachtungserlebnis als die erste der n1 downgesampleten Videosequenzen zu bieten.

6. Verfahren nach einem der Ansprüche 1 bis 5, und worin die n2 Videorahmen codierte Videorahmen umfassen.

7. Verfahren nach Anspruch 6, und worin die codierten Videorahmen MPEGcodierte Videorahmen umfassen.

8. Verfahren nach Anspruch 7, und worin die MPEG-codierten Videorahmen mindestens eines von Folgendem umfassen: MPEG-2-codierte Videorahmen und MPEG-4-codierte Videorahmen.

9. Digitaler Videorekorder (DVR, 120), umfassend:
einen Speicher, der Video speichert; und
ein DVR-Verarbeitungselement (160), das dafür eingerichtet ist:
aus dem Speicher gespeichertes Video abzurufen, das aus einem einzelnen Videostrom aufgezeichnet wurde, wobei der einzelne Videostrom eine plurale ganze Zahl n2 von Videorahmen umfasst, wobei jeder der n2 Videorahmen eine plurale ganze Zahl n1 von räumlich kombinierten Teilbildem umfasst und worin jedes der Teilbilder einem Rahmen aus einer von n1 downgesampleten Videosequenzen entspricht, wodurch die n2 Videorahmen n1 downgesamplete Videosequenzen umfassen;
mindestens einen Teil einer ersten der n1 downgesampleten Videosequenzen zu upsamplen, wodurch eine erste upgesamplete Videosequenz erzeugt wird;
die erste upgesamplete Videosequenz auf einer Anzeige während des normalen Betrachtens von Inhalten anzuzeigen;
die Aktivierung eines Trickmodus zu ermitteln, der eines von Folgendem umfasst: ein Schnellvorlaufmodus; und ein Rückspulmodus; und
als Antwort auf die Ermittlung der Aktivierung des Trickmodus:
mindestens einen Teil einer zweiten der n1 downgesampleten Videosequenzen zu upsamplen, wodurch eine zweite upgesamplete Videosequenz erzeugt wird; und
die zweite upgesamplete Videosequenz anstelle der ersten upgesampleten Videosequenz zumindest während eines Teils einer Aktivierungsperiode des Trickmodus anzuzeigen.

10. DVR (120) nach Anspruch 9, und worin das abgerufene Video mit Signalisierungsinformation verknüpft ist, die dem DVR signalisiert, das Upsampling zu beginnen.

11. DVR (120) nach Anspruch 9 oder Anspruch 10, und worin n1 gleich zwei ist.

12. DVR (120) nach einem der Ansprüche 9 bis 11, und worin die zweite der n1 downgesampleten Videosequenzen Werbeinformation umfasst.

13. DVR (120) nach einem der Ansprüche 9 bis 12, und worin die zweite der n1 downgesampleten Videosequenzen darauf zugeschnitten ist, während des Abspielens des Trickmodus ein besseres Betrachtungserlebnis als die erste der n1 downgesampleten Videosequenzen zu bieten.

14. DVR (120) nach einem der Ansprüche 9 bis 13, und worin die n2 Videorahmen codierte Videorahmen umfassen.

15. DVR (120) nach Anspruch 14, und worin die codierten Videorahmen MPEGcodierte Videorahmen umfassen.

## Revendications

1. Procédé de substitution vidéo destiné à être utilisé avec un enregistreur vidéo numérique (DVR, 120) lequel est exploitable de manière à stocker du contenu vidéo, le procédé consistant à :
récupérer de la vidéo stockée enregistrée à partir d'un flux vidéo unique, le flux vidéo unique comprenant un nombre entier pluriel n2 de trames vidéo, chacune des n2 trames vidéo comprenant un nombre entier pluriel n1 de sous-images combinées spatialement, et dans lequel chacune desdites sous-images correspond à une trame d'une des n1 séquences vidéo sous-échantillonnées, les n2 trames vidéo comprenant par conséquent n1 séquences vidéo sous-échantillonnées ;
sur-échantillonner au moins une partie d'une première séquence parmi les n1 séquences vidéo sous-échantillonnées, ce qui permet de produire par conséquent une première séquence vidéo sur-échantillonnée ;
afficher la première séquence vidéo sur-échantillonnée sur un écran d'affichage au cours d'un affichage de contenu conventionnel ;
détecter l'activation d'un mode spécifique comprenant l'un des suivants : un mode d'avance rapide et un mode de rembobinage ; et
en réponse à la détection :
sur-échantillonner au moins une partie d'une seconde séquence parmi les n1 séquences vidéo sous-échantillonnées, ce qui permet de produire par conséquent une seconde séquence vidéo sur-échantillonnée ; et
afficher la seconde séquence vidéo sur-échantillonnée au lieu de la première séquence vidéo sur-échantillonnée au cours d'au moins une partie d'une période d'activation du mode spécifique.

2. Procédé selon la revendication 1, dans lequel le contenu vidéo récupéré est associé à des informations de signalisation qui indiquent à l'enregistreur DVR (120) de mettre en oeuvre le sur-échantillonnage.

3. Procédé selon la revendication 1 ou 2, dans lequel n1 est égal à deux.

4. Procédé selon l'une quelconque des revendications 1 à 3, dans lequel la seconde séquence parmi les n1 séquences vidéo sous-échantillonnées comprend des informations publicitaires.

5. Procédé selon l'une quelconque des revendications 1 à 4, dans lequel la seconde séquence parmi les n1 séquences vidéo sous-échantillonnées est apte à offrir une expérience d'affichage meilleure, au cours d'une lecture en mode spécifique, que celle de la première séquence parmi les n1 séquences vidéo sous-échantillonnées.

6. Procédé selon l'une quelconque des revendications 1 à 5, et dans lequel les n2 trames vidéo comprennent des trames vidéo codées.

7. Procédé selon la revendication 6, dans lequel les trames vidéo codées comprennent des trames vidéo codées au format MPEG.

8. Procédé selon la revendication 7, dans lequel les trames vidéo codées au format MPEG comprennent au moins l'un des trames suivantes : des trames vidéo codées au format MPEG-2 ; et des trames vidéo codées au format MPEG-4.

9. Enregistreur vidéo numérique (DVR, 120) comprenant :
une mémoire stockant du contenu vidéo ; et
un élément de traitement d'enregistreur DVR (160) apte à :
récupérer, à partir de la mémoire, de la vidéo stockée enregistrée à partir d'un flux vidéo unique, le flux vidéo unique comprenant un nombre entier pluriel n2 de trames vidéo, chacune des n2 trames vidéo comprenant un nombre entier pluriel n1 de sous-images combinées spatialement, et dans lequel chacune desdites sous-images correspond à une trame d'une des n1 séquences vidéo sous-échantillonnées, les n2 trames vidéo comprenant par conséquent n1 séquences vidéo sous-échantillonnées ;
sur-échantillonner au moins une partie d'une première séquence parmi les n1 séquences vidéo sous-échantillonnées, ce qui permet de produire par conséquent une première séquence vidéo sur-échantillonnée ;
afficher la première séquence vidéo sur-échantillonnée sur un écran d'affichage au cours d'un affichage de contenu conventionnel ;
détecter l'activation d'un mode spécifique comprenant l'un des suivants : un mode d'avance rapide et un mode de rembobinage ; et
en réponse à la détection de l'activation du mode spécifique :
sur-échantillonner au moins une partie d'une seconde séquence parmi les n1 séquences vidéo sous-échantillonnées, ce qui permet de produire par conséquent une seconde séquence vidéo sur-échantillonnée ; et
afficher la seconde séquence vidéo sur-échantillonnée sur l'écran d'affichage au lieu de la première séquence vidéo sur-échantillonnée au cours d'au moins une partie d'une période d'activation du mode spécifique.

10. Enregistreur DVR (120) selon la revendication 9, dans lequel le contenu vidéo récupéré est associé à des informations de signalisation qui indiquent à l'enregistreur DVR de mettre en oeuvre un sur-échantillonnage.

11. Enregistreur DVR (120) selon la revendication 9 ou 10, dans lequel n1 est égal à deux.

12. Enregistreur DVR (120) selon l'une quelconque des revendications 9 à 11, dans lequel la seconde séquence parmi les n1 séquences vidéo sous-échantillonnées comprend des informations publicitaires.

13. Enregistreur DVR (120) selon l'une quelconque des revendications 9 à 12, dans lequel la seconde séquence parmi les n1 séquences vidéo sous-échantillonnées est apte à proposer une expérience d'affichage meilleure, au cours d'une lecture en mode spécifique, que celle de la première séquence parmi les n1 séquences vidéo sous-échantillonnées.

14. Enregistreur DVR (120) selon l'une quelconque des revendications 9 à 13, dans lequel les n2 trames vidéo comprennent des trames vidéo codées.

15. Enregistreur DVR (120) selon la revendication 14, dans lequel les trames vidéo codées comprennent des trames vidéo codées au format MPEG.
